# EUROPÄISCHE PATENTSCHRIFT

(11) **EP 2 049 870 B1**
(45) Veröffentlichungstag und Bekanntmachung des Hinweises auf die Patenterteilung: **05.03.2014**
(21) Anmeldenummer: 07786976.6
(22) Anmeldetag: 02.07.2007
(51) Int. Cl.: G01B 11/275

(54) **VERFAHREN ZUM BESTIMMEN DER DREHACHSE UND DES DREHZENTRUMS EINES FAHRZEUGRADS**
METHOD FOR DETERMINING THE ROTATIONAL AXIS AND THE ROTATING CENTER OF A VEHICLE WHEEL
PROCÉDÉ DE DÉTERMINATION DE L'AXE DE ROTATION ET DU CENTRE DE ROTATION D'UNE ROUE DE VÉHICULE

(30) Priorität: 31.07.2006 DE 102006035924
(43) Veröffentlichungstag der Anmeldung: 22.04.2009
(73) Patentinhaber: Robert Bosch GmbH, 70442 Stuttgart (DE)
(72) Erfinder: UFFENKAMP, Volker, 71638 Ludwigsburg (DE); NOBIS, Guenter, 72622 Nuertingen (DE); ABRAHAM, Steffen, 31134 Hildesheim (DE)
(86) Internationale Anmeldenummer: PCT/EP2007/056621
(87) Internationale Veröffentlichungsnummer: WO 2008/015063

(56) Entgegenhaltungen:
- EP-A2- 1 092 967
- WO-A-01/38843
- DE-A1- 19 757 760
- DE-A1- 19 934 864

## Beschreibung

### Stand der Technik

Die Erfindung bezieht sich auf ein Verfahren zum Bestimmen der geometrischen Lage der Drehachse und des Drehzentrums eines Fahrzeugrades in einem Messplatz-Koordinatensystem mittels mindestens zweier in Position und Lage einander zugeordneter Bildaufnahmeeinheiten während der Fahrt des Fahrzeuges und einer diesen nachgeordneten, die aufgenommenen Bildinformationen verarbeitenden Auswerteeinrichtung unter Einbeziehung mehrerer am Rad vorhandener oder für die Messung angebrachter Radmerkmale und mindestens eines an der Karosserie vorhandenen oder für die Messung angebrachten Karosseriemerkmals, wobei zeitsynchron 2D-Koordinaten der Radmerkmale und des mindestens einen Karosseriemerkmals erfasst und daraus deren 3D-Koordinaten in gewissen Zeitabständen errechnet werden und in einen vorher festgelegten Referenzzeitpunkt oder entsprechende Referenzposition des Fahrzeugrades unter Berücksichtigung des relativ zur Referenzposition von dem mindestens einen Karosseriemerkmal zurückgelegten Fahrwegs zurückgerechnet werden.

Ein Verfahren dieser Art ist in der DE 100 50 653 A1 angegeben. Bei diesem bekannten Verfahren werden mit Hilfe von Kameras, einem Referenz-Koordinatensystem am Prüfplatz und optischen Merkmalen am Fahrzeugrad und an der Karosserie die Fahrachse und weiterhin Rad- und Achsgeometriedaten ermittelt, wobei das Fahrzeug an der optischen Messeinrichtung mit den Bildaufnahme-einheiten vorbeifährt. Ähnliche Verfahren zur optischen Messung von Rad- und Achsgeometriedaten sind auch in der DE 199 34 864 A1 und der DE 197 57 760 A1 gezeigt, wobei die Messung ebenfalls in Vorbeifahrt des Fahrzeugs erfolgt.

Die vorstehend genannten Verfahren stützen sich auf die Messung von am Fahrzeug vorhandenen oder eigens für die Messung angebrachten Merkmale, wobei neben Radmerkmalen auch mindestens ein Karosseriemerkmal und eine Bezugsmerkmalsanordnung zur Referenzierung der Messeinrichtung vorgesehen sind. Zur Bestimmung der Raddrehebene werden mit den Messeinrichtungen fortlaufend zeitsynchrone Bilder bei (bezüglich des Drehwinkels) unterschiedlichen Radstellungen und unterschiedlichen Fahrzeugpositionen aufgenommen. Dabei wird mit den zeitlich aufeinander folgenden Koordinaten der an der Karosserie vorhandenen Merkmale die Bewegungsbahn des Fahrzeugs relativ zur Bezugsmerkmalsanordnung bestimmt. Aus den Positionen der in den verschiedenen Drehstellungen des Rades erfassten Koordinaten der Radmerkmale wird unter Berücksichtigung der Fahrzeugbewegung die Raddrehebene bestimmt. Dabei ist es möglich, den Betrag eines Formfehlers der Radfelge (Felgenschlag) zu ermitteln und zu berücksichtigen. Mit diesen Informationen können nun das Fahrzeugkoordinatensystem und die Rad- und Achsgeometriedaten rechnerisch ermittelt werden. Eine Beschreibung des Verfahrens zur Bestimmung der Raddrehebene im Einzelnen ist nicht offenbart.

Zur Bestimmung des Felgenschlags als Korrekturgröße für die Achsvermessung werden bisher auch Rollensätze oder gegenläufige Schiebeplatten zum Durchdrehen der Räder bei stillstehendem Fahrzeug eingesetzt.

Es sind auch Verfahren bekannt, bei denen in drei verschiedenen Rollpositionen des Rades auf der sehr ebenen Fläche eines Achsmessplatzes die Winkelpositionen von am Rad montierten Winkelsensoren oder von am Rad montierten optischen Targets, die aus einer präzisen Anordnung einzelner optisch erfassbarer Flächen besteht, von dem entsprechenden Achsmess-System erfasst und daraus eine Felgenschlagkompensation errechnet wird. Derartige Targets sind z.B. in der US 6,252,973 im Detail beschrieben.

Die Bestimmung des Felgenschlags bei angehobenem Rad wird heute von den meisten Fahizeugherstellern nicht mehr zugelassen, weil Verspannungen in der Radaufhängung nach dem Absetzen der Räder zu große Fehler bei der nachfolgenden Achsvermessung verursachen.

Bei einem in der DE 42 12 426 C1 beschriebenen Verfahren rotieren die Räder des Fahrzeugs in Rollenprismen, wobei das Fahrzeug steht. Die Räder sind außerhalb der Drehachse mit einer optisch registrierbaren Markierung versehen, die während der Drehung des Rades mit zwei synchronisierten Kameras erfasst wird. Aus den Raumlagen der Markierung auf dem Rad werden die Drehachse sowie Spur und Sturz bestimmt.

Der Erfindung liegt die Aufgabe zugrunde, ein Verfahren zum Bestimmen der Drehachse und des Drehzentrums eines Fahrzeugrades bereit zu stellen, mit dem während einer Fahrt insbesondere auch auf einer realen Fahrbahn möglichst zuverlässige und genaue Messergebnisse erhalten werden.

### Offenbarung der Erfindung

### Vorteile der Erfindung

Diese Aufgabe wird mit den Merkmalen des Anspruches 1 gelöst. Hierbei ist vorgesehen, dass die Bahnkurven der Radmerkmale und des mindestens einen Karosseriemerkmals bei der Auswertung einer Analyse bezüglich der Auswirkungen mindestens einer der Einflussgrößen Lenkeinschlag, Lenkbewegung, Fahrbahnunebenheit, Geschwindigkeitsänderung unterzogen werden und dass aus der Analyse Korrekturwerte oder Ausgleichsfunktionen zum Korrigieren der Auswirkungen gewonnen werden.

Mit diesen Maßnahmen werden bei einer realen Fahrt auf einer realen, mit Unebenheiten behafteten Fahrbahn gegebenenfalls auftretende Auswirkungen der von den realen Gegebenheiten herrührenden Einflussgrößen auf die Messergebnisse praktisch weitgehend eliminiert, wodurch eine erhöhte Messgenauigkeit und Zuverlässigkeit der Messergebnisse erreicht wird.

In näheren Untersuchungen der Erfinder wurde festgestellt, dass sich Unebenheiten realer Fahrbahnen und reale Fahrzeugbewegungen bei der Bestimmung der Drehachse und des Drehzentrums von Fahrzeugrädern wesentlich auf die Genauigkeit der Messung auswirken können. Insbesondere geht es um die Berücksichtigung der Taumelbewegung des Rades bzw. der Radfelge bzw. eines Radadapters, die in Folge von Formfehlern der Radfelge, des Reifens und gegebenenfalls eines zusätzlichen Radadapters bei der Raddrehung auftritt (Felgenschlag), der Federungsbewegung des Rades und der Karosserie, die in Folge von Fahrbahnunebenheiten oder Geschwindigkeitsänderungen während der Fahrt auftreten und der Lenkbewegung der Räder, die entweder durch Lenkrad nicht in Geradeausfahrt oder durch Lenkradbewegung während der Fahrt auftreten.

Die wesentlichen Vorteile der Erfindung bestehen in einer präzisen Bestimmung der Drehachse und des Drehzentrums eines Rades während der Fahrt auf einer realen Fahrbahn. Damit werden zusätzliche mechanische Einrichtungen, wie z.B. Rollensätze oder Schiebeplatten zur Drehung des Rades bei stillstehendem Fahrzeug, für die Bestimmung der Felgenschlagkompensation als Korrekturgröße für die Achsvermessung vermieden.

Das Verfahren ist einsetzbar zur Bestimmung der Felgenschlagkompensation während der Auffahrt eines Fahrzeugs auf einen Achsmessplatz, bei einer Achs-Schnellvermessung z.B. im Rahmen der Fahrzeugannahme auf einer Prüfstraße, wobei das Fahrzeug auf dem Werkstattfußboden rollt oder zur Achsvermessung während der Fahrt bei unterschiedlichen Fahrzuständen.

Heutige Anforderungen an die Ebenheit eines Achsmessplatzes können damit deutlich reduziert werden, so dass eine Messung auf einem normalen Werkstattfußboden oder einer guten Fahrbahnoberfläche möglich wird.

Hierbei brauchen keine speziellen Marken am Fahrzeugrad bzw. der Karosserie angebracht zu werden, sondern es können auch vorhandene Merkmale genutzt bzw. nach eine besonderen Verfahren, wie es in der DE 10 2005 017 624 ausgeführt ist, bestimmt werden.

Das Verfahren ist grundsätzlich auch für alternative optische Achsmess-Systeme anwendbar, wie z.B. Achsmess-Systeme mit Streifenprojektion.

Vorteilhafte Ausgestaltungen der Erfindung sind in den Unteransprüchen angegeben.

Verschiedene Ausgestaltungen für die Auswertung und eine genaue Bestimmung der Drehachse und des Drehzentrums des Fahrzeugrades bestehen darin, dass die Analyse der Bahnkurven vor der Rückrechnung der 3D-Koordinaten oder während einer gemeinsamen Ausgleichsrechnung bei der Rückrechnung durchgeführt wird.

Eine wesentliche Eliminierung fehlerhafter Auswirkungen von Einflussgrößen wird dadurch erreicht, dass als Korrekturwerte oder Ausgleichsfunktionen Wankwinkeldaten aus der Differenz der Bewegungsbahn der Karosseriemerkmale der linken und der rechten Fahrzeugseite ermittelt werden.

Weitere vorteilhafte Maßnahmen, mit denen weitere unerwünschte Auswirkungen von Einflussgrößen eliminiert werden können, bestehen darin, dass als Korrekturwerte oder Ausgleichsfunktionen Federbewegungsdaten aus der Differenz der Bewegungsbahn der Karosseriemerkmale und der Bewegungsbahn des Raddrehzentrums jeweils in z-Richtung ermittelt werden, sowie ferner darin, dass Lenkwinkeldaten des Rades aus der Bewegungsbahn und/oder der daraus abgeleiteten Relativgeschwindigkeit und/oder Relativbeschleunigung der Radmerkmale gegenüber der Bewegungsbahn der Karosseriemerkmale in der Projektion der 3D-Bewegungsbahnen in die Fahrbahnebene ermittelt werden, wobei zur Ableitung von Korrekturwerten oder einer Ausgleichsfunktion zumindest das linke Fahrzeugrad oder zumindest das rechte Fahrzeugrad oder beide Fahrzeugräder gleichzeitig analysiert werden.

Ist der Achsmessplatz als Hebebühne ausgeführt, so können negative Auswirkungen von Massen- und Beschleunigungskräften auf die Hebebühne dadurch bei der Herleitung der Messergebnisse zumindest weitgehend ausgeschlossen werden, dass dynamische und/oder quasistatische Bewegungsdaten der Hebebühne mit dem darauf befindlichen Fahrzeug aus einer Analyse der Bewegungsbahn mindestens eines an der Hebebühne vorhandenen bzw. angebrachten Messmerkmals ermittelt werden.

Eine begrenzte Komplexität der Ausgleichsfunktionen wird dadurch erreicht, dass höher dynamische Vorgänge im Zeitverlauf der Bewegungsbahn der Radmerkmale und/oder Karosseriemerkmale detektiert und für die weitere Datenanalyse ausgeblendet werden.

Die erfindungsgemäße Maßnahme, die Auswirkungen unerwünschter Einflussgrößen auf die Messergebnisse zu beseitigen, besteht darin, dass zusätzliche Korrekturdaten oder Korrekturfunktionen eingebracht werden, die die Abhängigkeit der Spur- und Sturzwinkel vom Einfederungszustand und vom Lenkwinkel berücksichtigen.

Dabei besteht eine vorteilhafte Vorgehensweise darin, dass die Korrekturdaten über eine in einem Achsmess-System ohnehin vorhandene Fahrzeugdatenbank für den betreffenden Fahrzeugtyp bereitgestellt werden.

Eine weitere vorteilhafte Vorgehensweise besteht darin, dass bei Fehlen spezifischer Fahrzeugdaten das betreffende Fahrzeug automatisch einer vordefinierten Fahrzeugklasse zugeordnet wird und von der Datenbank die anzuwendenden Korrekturdaten bereitgestellt werden, wobei eine Klassifizierung der Fahrzeuge nach fahrwerksrelevanten Parametern vorgesehen ist.

Bei verschiedenen weiteren vorteilhaften Ausgestaltungen ist vorgesehen, dass sich die auf der Basis der Ausgleichsfunktionen durchgeführte Ausgleichsrechnung auf das gesamte Fahrzeug, jeweils auf die Vorderachse und die Hinterachse oder auf jedes einzelne Rad bezieht.

### Kurze Beschreibung der Zeichnungen

Die Erfindung wird nachfolgend anhand von Ausführungsbeispielen unter Bezugnahme auf die Zeichnungen näher erläutert. Es zeigen:
- Fig. 1: die Bewegungsbahn eines Radmerkmals bei einem rotierenden Rad und einem rollenden Rad,
- Fig. 2: die Koordinaten von vier Radmerkmalen in acht Abrollpositionen des Rades,
- Fig. 3: Koordinaten von vier Radmerkmalen in acht Abrollpositionen des Rades nach Fig. 2 nach einer Rückrechnung in eine Referenzposition,
- Fig. 4: die Projektion von Bahnkurven von Karosseriemerkmalen und des Schwerpunktes von Radmerkmalen in die Fahrbahnebene x, y,
- Fig. 5: eine geschwindigkeitsproportionale Größe der Radmerkmale und Karosseriemerkmal, dargestellt in Abhängigkeit der Bildnummer und
- Fig. 6: eine Darstellung zum Verlauf eines Abstandes zwischen zwei Karosseriemerkmalen und dem Schwerpunkt der Radmerkmale über der Bildnummer beim Aus- und Einfedem.

### Ausführungsformen der Erfindung

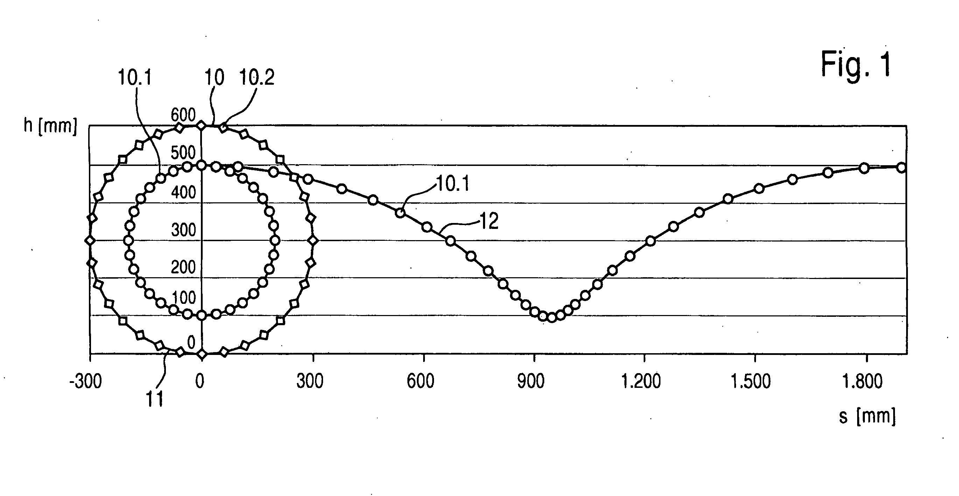

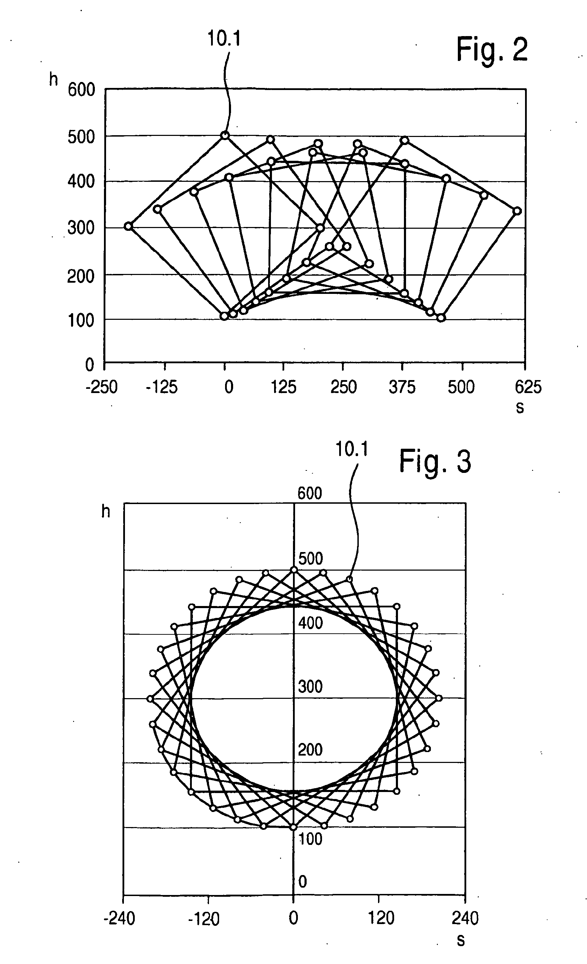

Fig. 1 zeigt in der linken Bildhälfte die Bewegungsbahn zweier Radmerkmale 10, nämlich eines näher an einem Drehzentrum gelegenen inneren Radmerkmals 10.1 und eines am Außenumfang gelegenen äußeren Radmerkmals 10.2, die in einer Höhe h über dem Rollweg s angeordnet sind. Bei einer Drehbewegung des Rades bei stillstehendem Fahrzeug (z.B. Fahrzeug ausgehoben) sind hierbei die Bewegungsbahnen 11 Kreisbahnen. Daneben ist in Fig. 1 auch die Bewegungsbahn 12 des inneren Radmerkmals 10.1 bei bewegtem Fahrzeug und dadurch rollendem Rad dargestellt, wobei sich als Bewegungsbahn 12, unter der Annahme einer geradlinigen Fahrzeugbewegung auf einer idealen Ebene, eine Zykloide ergibt. Zur Aufnahme der Bewegungsbahnen 11 bzw. 12 können die in den eingangs genannten Druckschriften näher angegebenen Messeinrichtungen mit den Bildaufnahmeeinheiten verwendet werden, wobei aus unterschiedlichen Perspektiven zeitsynchron Bilder aufgenommen werden. Fig. 2 zeigt die Koordinaten von vier Radmerkmalen 10.1 in acht Abrollpositionen des Fahrzeugrades über dem Rollweg s, während in Fig. 3 die Koordinaten der vier Radmerkmale nach Fig. 2 in den acht Abrollpositionen des Fahrzeugrades nach der Rückrechnung in eine Referenzposition dargestellt ist.

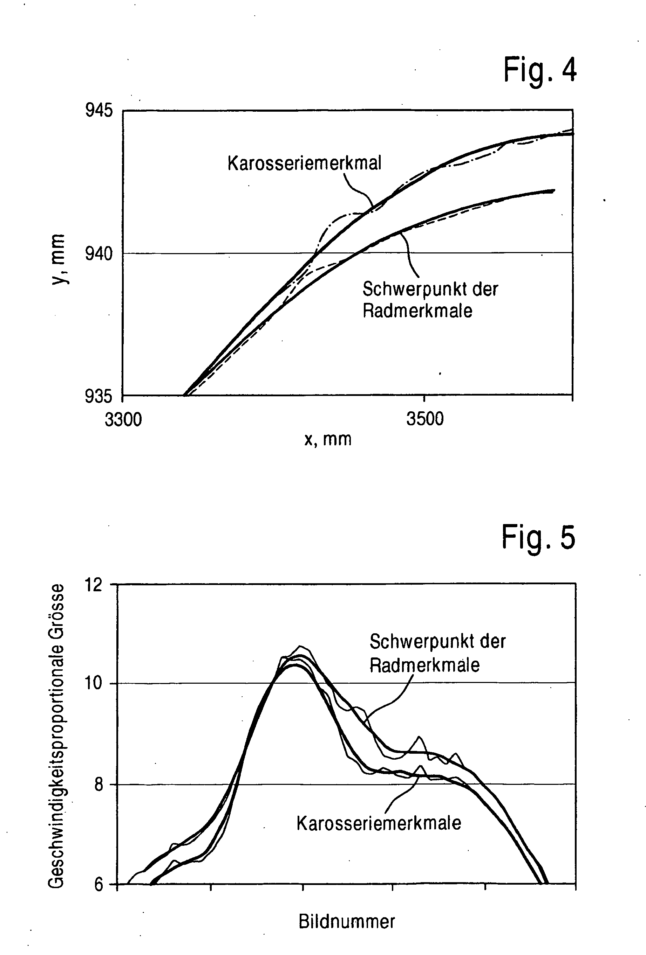

Fig. 4 zeigt die Projektion der Bahnkurven eines Karosseriemerkmals (strichpunktierte Linie) mit Ausgleichskurve (durchgezogene Linie) und des Schwerpunktes von Radmerkmalen (gestrichelte Linie) ebenfalls mit Ausgleichskurve (durchgezogene Linie) in der Fahrbahnebene x, y. In Fig. 5 ist die Geschwindigkeit eines Karosseriemerkmals und des Schwerpunkts der Radmerkmale ausgedrückt durch eine geschwindigkeitsproportionale Größe über der Bildnummer anstelle der Zeit wiedergegeben, wobei ebenfalls eine jeweilige Augleichskurve eingetragen ist. Aus dem unterschiedlichen Geschwindigkeitsverlauf lässt sich die Lenkbewegung ermitteln.

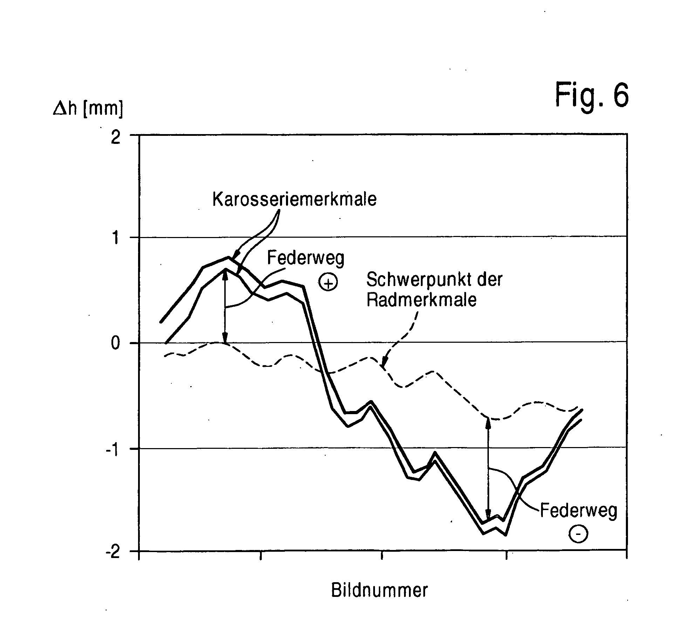

In Fig. 6 ist bezüglich der Rad-Vorderachse ein Abstand Δh zwischen Karosseriemerkmalen und dem Schwerpunkt der Radmerkmale über der Bildnummer dargestellt. Dabei bedeutet ein positiver Federweg "+" ein Ausfedern bei Beschleunigung und ein negativer Federweg "-" ein Einfedern bei Verzögerung, wie neben den Doppelpfeilen angegeben.

Bei einem auf einer ebenen Fahrbahn geradlinig rollenden Rad bewegen sich die Radmerkmale wie gezeigt außerhalb des Drehzentrums auf Bahnkurven 12 in Form von Zykloiden und die Karosseriemerkmale auf geradlinigen Bahnkurven entlang des Fahrweges. Dabei setzt sich die jeweilige Zykloide aus der Rotationsbewegung des Radmerkmals um das Drehzentrum und den zurückgelegten Fahrweg bzw. Rollweg s zusammen, wie aus Fig. 1 ersichtlich. Zur Durchführung des Verfahrens werden wie in den eingangs genannten Patentschriften dargelegt, im Messbereich des Achsmess-Systems zeitsynchron zweidimensionale Koordinaten (2D-Koordinaten) der Rad- und Karosseriemerkmale erfasst und damit deren entsprechende dreidimensionale Koordinaten (3D-Koordinaten) berechnet. Bei der Fahrt des Fahrzeugs werden in dieser Weise 3D-Koordinaten der Rad- und Karosseriemerkmale in gewissen Zeitabständen, die der Messfrequenz entsprechen, entlang der Zykloiden 12 der Radmerkmale 10 und Bahnkurven der Karosseriemerkmale gemessen.

Nach der Messwerterfassung werden in einem ersten Schritt alle Koordinaten der zeitlich nacheinander gemessenen Radmerkmale in einen vorher festgelegten Referenzzeitpunkt bzw. entsprechende Referenzposition des Fahrzeugrades unter Berücksichtigung des relativ zur Referenzposition von den Karosseriemerkmalen zurückgelegten Fahrweges zurückgerechnet. Die Radmerkmale 10 sind danach auf Kreisbahnen 11 um die räumliche Drehachse des Fahrzeugrads angeordnet. Damit erhält man ein Ergebnis, das der Rotation jedes Radmerkmals bei stehendem Fahrzeug entspricht, wie die Rückrechnung nach Fig. 3 aus der Darstellung nach Fig. 2 zeigt. Aufgrund der Formfehler des Fahrzeugrades bzw. der räumlichen Lage der Radmerkmale am Fahrzeugrad bewegen sich die Radmerkmale 10 auf parallelen Drehebenen zur Drehebene des Fahrzeugrades. Aus den zurückgerechneten 3D-Koordinaten der Radmerkmale 10 wird nun unter Beachtung der Parallelität der Drehebenen der einzelnen Radmerkmale 10 der Drehvektor des Fahrzeugrades und Berücksichtigung der Abstände der parallelen Drehebenen das Drehzentrum bestimmt.

In der Praxis hat sich gezeigt, dass mit diesem einfachen Modell bei der Fahrt eines realen Fahrzeuges auf einer unebenen (realen) Fahrbahn nicht die erforderliche Genauigkeit erreicht wird.

Daher werden bei der Rückrechnung der gemessenen 3D-Koordinaten der Rad- und Karosseriemerkmale zusätzlich folgende Wirkungsmechanismen berücksichtigt:
- Falls die Lenkung nicht in Geradeausfahrt eingestellt ist, bewirkt dies, dass sich die im Raum bewegenden Rad- und Karosseriemerkmale in der Projektion auf die Fahrbahnebene nicht auf einer Geraden, sondern auf einer Kurve bewegen.
- Eine Lenkradbewegung bewirkt, dass sich Rad- und Karosseriemerkmale, insbesondere in der Projektion der Raumkurve der bewegten Merkmale auf die Fahrbahnebene, nicht auf einer Geraden, sondern auf einer Kurve mit Wendepunkten bewegen.
- Fahrbahnunebenheiten bewirken eine Veränderung der Bewegung der Rad- und Karosseriemerkmale insbesondere in senkrechter Richtung zur Fahrbahn (z-Richtung). Unterschiedliche Unebenheiten an den Radaufstandspunkten führen zu Wank- und/oder Nickbewegungen des Fahrzeuges, Veränderung der Radlastverteilung bzw. Einfederungszustand des einzelnen Rades. Stärkere Änderungen im Fahrbahnprofil verursachen dynamische Massenkräfte, die insbesondere eine Federbewegung der Karosserie (Federelemente in der Radaufhängung) und des Reifens zur Folge haben.
- Geschwindigkeitsänderungen bewirken Beschleunigungs- bzw. Verzögerungskräfte, die insbesondere eine Federbewegung der Karosserie (Federelemente in der Radaufhängung) und des Reifens zur Folge haben.
- Wenn der Achsmessplatz als Hebebühne ausgeführt ist, können die genannten dynamischen Masse- und Beschleunigungskräfte sogar eine Bewegung der Hebebühne bewirken.

In einer ersten Ausführungsform ist daher vorgesehen, dass vor der oben beschriebenen Rückrechnung der 3D-Koordinaten der Radmerkmale eine Analyse der Bahnkurven der Rad- und Karosseriemerkmale durchgeführt wird, um die Auswirkungen der genannten Wirkungsmechanismen in der aktuellen Messung zu erfassen. Das Ergebnis der Analyse sind Korrekturwerte oder Ausgleichsfunktionen, mit denen anschließend die Auswirkungen von z.B. Fahrbahnunebenheiten, Lenkbewegungen oder Geschwindigkeitsänderungen in den gemessenen 3D-Koordinaten vor der Rückrechnung korrigiert werden. Dabei werden z.B. folgende Korrekturwerte oder Ausgleichsfunktionen ermittelt und anschließend für die Messwertkorrektur eingesetzt:
- Wankwinkel aus der Differenz der Bewegungsbahn der Karosseriemerkmale der linken und rechten Fahrzeugseite,
- Federbewegung aus der Differenz der Bewegungsbahn in z-Richtung der Karosseriemerkmale und der Bewegungsbahn des Schwerpunktes der Radmerkmale, der näherungsweise dem Raddrehzentrum entspricht,
- Lenkwinkel des Rades aus der Bewegungsbahn und/oder der daraus abgeleiteten Relativgeschwindigkeit und/oder Relativbeschleunigung des Schwerpunktes der Radmerkmale gegenüber der Bewegungsbahn der Karosseriemerkmale in der Projektion der 3D-Bewegungsbahnen in die Fahrbahnebene, wobei zur Ableitung von Korrekturwerten bzw. einer Ausgleichsfunktion das linke und rechte Fahrzeugrad gleichzeitig analysiert werden,
- dynamische Bewegung der Hebebühne mit dem darauf befindlichen Fahrzeug aus der Analyse der Bewegungsbahn eines an der Hebebühne vorhandenen bzw. angebrachten Messmerkmals.

Um die Komplexität der Ausgleichsfunktionen zu begrenzen, ist vorgesehen, höher dynamische Anteile im Zeitverlauf oder im Verlauf eines Parameters, z.B. Lenkwinkel oder Federweg, als Funktion eines anderen Parameter, z.B. der Fahrstrecke, zu detektieren und außerhalb eines zulässigen Maßes aus dem gemessenen Messwertverlauf für die weitere Analyse auszublenden. Als Beispiel sei hier die Analyse der Beschleunigung bzw. Bremsverzögerung des Fahrzeugs (Karosserie und/oder Rad) genannt, die sich mit den bekannten physikalischen Zusammenhängen aus dem Weg/Zeit-Verlauf bzw. dem Geschwindigkeits/Zeit-Verlauf ableiten lässt. Dabei erfolgt die Zeitmessung über die Triggerzeit der Bildmesseinheiten, (d.h. die Zeit, die zwischen zwei aufeinander folgenden Bildern liegt). Diese Triggerzeit ist eine dem Mess-System vorgegebene und definierte Zeitspanne. Damit ist eine Darstellung über der Reihenfolge der Bilder einer Zeitdarstellung äquivalent (vgl. Fig. 5).

Erfindungsgemäß werden zur weiteren Verbesserung der Genauigkeit zusätzliche Korrekturfaktoren bzw. Korrekturfunktionen eingesetzt, die die Abhängigkeit der Spur- und Sturzwinkel vom Einfederungszustand und vom Lenkwinkel berücksichtigen. Diese Korrekturfunktionen sind fahrzeugspezifisch. Deshalb ist vorgesehen, die Korrekturdaten vor der Korrekturrechnung über die in einem Achsmess-System ohnehin vorhandene Fahrzeugdatenbank für den konkreten Fahrzeugtyp bereit zu stellen. Eine Fahrzeugidentifikation wird bereits vor dem Start einer Achsvermessung standardmäßig durchgeführt.

Wenn keine fahrzeugspezifischen Daten verfügbar sind, wird das konkrete Fahrzeug automatisch einer vordefinierten Fahrzeugklasse zugeordnet und von der Fahrzeugbank werden die darauf anzuwendenden Korrekturdaten bereitgestellt. Dabei ist eine Klassifizierung der Fahrzeuge nach fahrwerksrelevanten Parametern, wie z.B. Antriebsart (beispielsweise Frontantrieb, Heckantrieb), Fahrzeugklasse (beispielsweise Sportwagen, Limousine, SUV) oder Fahrzeuggröße (beispielsweise Kleinwagen, Mittelklasse, Oberklasse) vorgesehen.

Erst nach der Durchführung der beschriebenen Korrektur der 3D-Koordinaten der Radmerkmale erfolgt deren Rückrechnung in einen vordefinierten Referenzzeitpunkt bzw. eine entsprechende Referenzposition und die anschließende Bestimmung des Drehvektors und des Drehzentrums für jedes Rad.

Bei einer weiteren Ausführungsform ist vorgesehen, dass die Analyse der Bahnkurven der Rad- und Karosseriemerkmale nicht, wie oben beschrieben, in einzelnen Schritten sondern in einer gemeinsamen Ausgleichsrechnung durchgeführt wird, wie sie aus dem Bereich der 3D-Bildmesstechnik bekannt ist. In Varianten kann sich diese Ausgleichsrechnung auf das gesamte Fahrzeug, jeweils auf die Vorderachse und die Hinterachse oder auf jedes einzelne Rad beziehen. Hierbei ist die erfindungsgemäße Anwendung der vorstehend beschriebenen Korrekturfunktionen für Spur und Sturz in Abhängigkeit vom Einfederungszustand und vom Lenkwinkel bei Bedarf ebenso vorgesehen.

## Patentansprüche

1. Verfahren zum Bestimmen der Drehachse und des Drehzentrums eines Fahrzeugrades mittels mindestens zweier in Position und Lage einander zuge ordneter Bildaufnahmeeinheiten während der Fahrt des Fahrzeuges und einer diesen nachgeordneten, die aufgenommenen Bildinformationen verarbeitenden Auswerteeinrichtung unter Einbeziehung mehrerer am Rad vorhandener oder für die Messung angebrachten Radmerkmale (10) und mindestens eines an der Karosserie vorhandenen oder für die Messung angebrachten Karosseriemerkmals, wobei zeitsynchron 2D-Koordinaten der Radmerkmale (10) und des mindestens einen Karosseriemerkmals erfasst und daraus deren 3D-Koordinaten in gewissen Zeitabständen errechnet werden und in einen vorher festgelegten Referenzzeitpunkt oder entsprechende Referenzposition des Fahrzeugrades unter Berücksichtigung des relativ zur Referenzposition von dem mindestens einen Karosseriemerkmal zurückgelegten Fahrwegs zurückgerechnet werden, wobei die Bahnkurven der Radmerkmale (10) und des mindestens einen Karosseriemerkmals bei der Auswertung einer Analyse bezüglich der Auswirkungen mindestens einer der Einflussgrößen Lenkeinschlag, Lenkbewegung, Fahrbahnunebenheit, Geschwindigkeitsänderung unterzogen werden, und wobei aus der Analyse Korrekturwerte oder Ausgleichsfunktionen zum Korrigieren der Auswirkungen gewonnen werden, **dadurch gekennzeichnet, dass** zusätzliche. Korrekturdaten oder Korrekturfunktionen eingebracht werden, die die Abhängigkeit der Spur- und Sturzwinkel vom Einfederungszustand und vom Lenkwinkel berücksichtigen.

2. Verfahren nach Anspruch 1, **dadurch gekennzeichnet, dass** die Analyse der Bahnkurven vor der Rückrechnung der 3D-Koordinaten oder während einer gemeinsamen Ausgleichsrechnung bei der Rückrechnung durchgeführt wird.

3. Verfahren nach Anspruch 1 oder 2, **dadurch gekennzeichnet, dass** als Korrekturwerte oder Ausgleichsfunktionen Wankwinkeldaten aus der Differenz der Bewegungsbahn der Karosseriemerkmale der linken und der rechten Fahrzeugseite ermittelt werden.

4. Verfahren nach einem der vorhergehenden Ansprüche, **dadurch gekennzeichnet, dass** als Korrekturwerte oder Ausgleichsfunkdonen Federbewegungsdaten aus der Differenz der Bewegungsbahn der Karosseriemerkmale und der Bewegungsbahn des Raddrehzentrums jeweils in z-Richtung ermittelt werden.

5. Verfahren nach einem der vorhergehenden Ansprüche, **dadurch gekennzeichnet, dass** Lenkwinkeldaten des Rades aus der Bewegungsbahn und/oder der daraus abgeleiteten Relativgeschwindigkeit und/oder Relativbeschleunigung der Radmerkmale gegenüber der Bewegungsbahn der Karosseriemerkmale in der Projektion der 3D-Bewegungsbahnen in die Fahrbahnebene ermittelt werden, wobei zur Ableitung von Korrekturwerten oder einer Ausgleichsfunktion zumindest das linke Fahrzeugrad oder zumindest das rechte Fahrzeugrad oder beide Fahrzeugräder gleichzeitig analysiert werden.

6. Verfahren nach einem der vorhergehenden Ansprüche, **dadurch gekennzeichnet, dass** dynamische Bewegungsdaten der Hebebühne mit dem darauf befindlichen Fahrzeug aus einer Analyse der Bewegungsbahn mindestens eines an der Hebebühne vorhandenen bzw. angebrachten Messmerkmals ermittelt werden.

7. Verfahren nach einem der vorhergehenden Ansprüche, **dadurch gekennzeichnet, dass** höher dynamische Vorgänge im Zeitverlauf der Bewegungsbahn der Radmerkmale (10) und/oder Karosseriemerkmale im Verlauf eines Parameters als Funktion weiterer Parameter wie z.B. der Fahrstrecke detektiert werden.

8. Verfahren nach Anspruch 1, **dadurch gekennzeichnet, dass** die Korrekturdaten über eine in einem Achsmess-System ohnehin vorhandene Fahrzeugdatenbank für den betreffenden Fahrzeugtyp bereitgestellt werden.

9. Verfahren nach Anspruch 8, **dadurch gekennzeichnet, dass** bei Fehlen spezifischer Fahrzeugdaten das betreffende Fahrzeug automatisch einer vordefinierten Fahrzeugklasse zugeordnet wird und von der Datenbank die anzuwendenden Korrekturdaten bereitgestellt werden, wobei eine Klassifizierung der Fahrzeuge nach fahrwerksrelevanten Parametern vorgesehen ist.

10. Verfahren nach einem der vorhergehenden Ansprüche, **dadurch gekennzeichnet, dass** sich die auf der Basis der Ausgleichsfunktionen durchgeführte Ausgleichsrechnung auf das gesamte Fahrzeug, jeweils auf die Vorderachse und die Hinterachse oder auf jedes einzelne Rad bezieht.

## Claims

1. Method for determining the rotational axis and the rotational centre of a vehicle wheel by means of at least two image recording units assigned to one another in terms of position and attitude while the vehicle is travelling, and by means of an evaluation device, assigned to the latter and processing the recorded image information including a plurality of wheel features (10) which are present on the wheel or provided for the measurement, and by means of at least one vehicle bodywork feature which is present on the vehicle bodywork or is provided for the measurement, wherein 2D coordinates of the wheel features (10) and of the at least one vehicle bodywork feature are recorded synchronously and the 3D coordinates thereof are calculated therefrom at certain time intervals and reverse calculated into a previously defined reference time or corresponding reference position of the vehicle wheel taking into account the path travelled along relative to the reference position by the at least one vehicle bodywork feature, wherein the trajectories of the wheel features (10) and of the at least one vehicle bodywork feature are subjected during the evaluation to an analysis regarding the effects of at least one of the influencing variables of the steering lock, steering movement, unevenness of the carriageway and change in speed, and wherein correction values or compensation functions for correcting the effects are acquired from the analysis, **characterized in that** additional correction data or correction functions which take into account the dependence of the toe angle and camber angle on the spring compression state and on the steering angle are introduced.

2. Method according to Claim 1, **characterized in that** the analysis of the trajectories is carried out before the reverse calculation of the 3D coordinates or during a common compensation calculation in the case of the reverse calculation.

3. Method according to Claim 1 or 2, **characterized in that** rolling angle data are determined as correction values or compensation functions from the difference between the movement path of the vehicle bodywork features of the left-hand side of the vehicle and those of the right-hand side of the vehicle.

4. Method according to one of the preceding claims, **characterized in that** spring movement data are determined as correction values or compensation functions from the difference between the movement path of the vehicle bodywork features and the movement path of the wheel rotation centre, in each case in the z-direction.

5. Method according to one of the preceding claims, **characterized in that** steering angle data of the wheel are determined from the movement path and/or the relative speed and/or relative acceleration of the wheel features derived therefrom compared to the movement path of the vehicle body work features in the projection of the 3D movement paths into the plane of the carriageway, wherein, in order to derive correction values or a compensation function, at least the left-hand vehicle wheel or at least the right-hand vehicle wheel or both vehicle wheels is/are analysed simultaneously.

6. Method according to one of the preceding claims, **characterized in that** dynamic movement data of the lifting platform with the vehicle located there is determined from an analysis of the movement path of at least one measuring feature which is present or provided on the lifting platform.

7. Method according to one of the preceding claims, **characterized in that** relatively highly dynamic processes in the time profile of the movement path of the wheel features (10) and/or vehicle bodywork features are detected in the course of a parameter as a function of further parameters such as, for example, the distance travelled.

8. Method according to Claim 1, **characterized in that** the correction data is made available by means of a vehicle database, present in any case in an axial measuring system, for the respective type of vehicle.

9. Method according to Claim 8, **characterized in that** in the absence of specific vehicle data the respective vehicle is assigned automatically to a predefined class of vehicle and the correction data to be applied is made available by the database, wherein there is provision for the vehicles to be classified according to chassis-relevant parameters.

10. Method according to one of the preceding claims, **characterized in that** the compensation calculation carried out on the basis of the compensation functions relates to the entire vehicle, in each case to the front axle and the rear axle or to each individual wheel.

## Revendications

1. Procédé pour déterminer l'axe de rotation et le centre de rotation d'une roue de véhicule au moyen d'au moins deux unité d'enregistrement d'image associées l'une à l'autre en position et en situation pendant le déplacement du véhicule et d'un dispositif d'interprétation traitant les informations d'image enregistrées, disposé à la suite de celles-ci, en impliquant plusieurs caractéristiques de roue (10) présentes sur la roue ou montées pour la mesure et au moins une caractéristique de carrosserie présente sur la carrosserie ou montée pour la mesure, les coordonnées 2D des caractéristiques de roue (10) et de l'au moins une caractéristique de carrosserie étant acquises de manière synchrone dans le temps et leurs coordonnées 3D étant calculées à partir de celles-ci à des intervalles de temps donnés puis recalculées à un instant de référence défini précédemment ou une position de référence correspondante de la roue de véhicule en tenant compte de la trajectoire parcourue par l'au moins une caractéristique de carrosserie par rapport à la position de référence, les portions de trajectoire des caractéristiques de roue (10) et de l'au moins une caractéristique de carrosserie étant, lors de l'interprétation, soumises à une analyse en rapport avec les effets d'au moins l'une des grandeurs d'influence braquage de la direction, mouvement de direction, irrégularité de la chaussée, modification de la vitesse, et des valeurs de correction ou des fonctions de compensation destinées à corriger les effets étant obtenues à partir de l'analyse, **caractérisé en ce que** des données de correction ou fonctions de correction supplémentaires sont introduites, lesquelles tiennent compte de la dépendance de l'angle de pincement et de piqué à l'état de compression de la suspension et à l'angle de direction.

2. Procédé selon la revendication 1, **caractérisé en ce que** l'analyse des portions de trajectoire est effectuée avant le recalcul des coordonnées 3D ou pendant un calcul de compensation commun lors du recalcul.

3. Procédé selon la revendication 1 ou 2, **caractérisé en ce que** les valeurs de correction ou les fonctions de compensation déterminées sont des données d'angle de roulis issues de la différence de trajectoire de déplacement entre les caractéristiques de carrosserie du côté gauche et du côté droit du véhicule.

4. Procédé selon l'une des revendications précédentes, **caractérisé en ce que** les valeurs de correction ou les fonctions de compensation déterminées sont des données de mouvement de ressort issues de la différence entre la trajectoire de déplacement des caractéristiques de carrosserie et la trajectoire de déplacement du centre de rotation de roue, respectivement dans la direction Z.

5. Procédé selon l'une des revendications précédentes, **caractérisé en ce que** les données d'angle de direction de la roue sont déterminées à partir de la trajectoire de déplacement et/ou de la vitesse relative qui en est dérivée et/ou de l'accélération relative des caractéristiques de roue par rapport à la trajectoire de déplacement des caractéristiques de carrosserie dans la projection des trajectoires de déplacement 3D dans le plan de la chaussée, au moins la roue de véhicule gauche ou au moins la roue de véhicule droite ou les deux roues de véhicule étant analysées simultanément pour la dérivation des valeurs de correction ou d'une fonction de compensation.

6. Procédé selon l'une des revendications précédentes, **caractérisé en ce que** les données de déplacement dynamiques de la plate-forme de levage sur laquelle se trouve le véhicule sont déterminées à partir d'une analyse de la trajectoire de déplacement d'au moins une caractéristique de mesure présente ou montée sur la plate-forme de levage.

7. Procédé selon l'une des revendications précédentes, **caractérisé en ce que** les phénomènes dynamiques élevés dans le tracé dans le temps de la trajectoire de déplacement des caractéristiques de roue (10) et/ou des caractéristiques de carrosserie sont détectés dans le tracé d'un paramètre en fonction d'autres paramètres comme, par exemple, le parcours.

8. Procédé selon la revendication 1, **caractérisé en ce que** les données de correction sont délivrées par le biais d'une base de données du véhicule pour le type de véhicule concerné qui est de toute façon présente dans un système de mesure d'axe.

9. Procédé selon la revendication 8, **caractérisé en ce qu'**en l'absence de données de véhicule spécifiques, une classe de véhicule prédéfinie est attribuée automatiquement au véhicule concerné et les données de correction à utiliser sont mises à disposition par la base de données, une classification des véhicules en fonction de paramètres en rapport avec le châssis étant prévue.

10. Procédé selon l'une des revendications précédentes, **caractérisé en ce que** le calcul de compensation effectué sur la base des fonctions de compensation se rapporte à l'ensemble du véhicule, respectivement à l'essieu avant et à l'essieu arrière ou à chaque roue individuelle.
